# EUROPEAN PATENT SPECIFICATION

(11) **EP 2 607 471 B1**
(45) Date of publication and mention of the grant of the patent: **14.05.2014**
(21) Application number: 12161345.9
(22) Date of filing: 26.03.2012
(51) Int. Cl.: C12G 1/00, B67C 3/02, B65D 17/00

(54) **Wine packaged in aluminium containers**
In Aluminiumbehälter abgefüllter Wein
Vin emballé dans des conteneurs en aluminium

(30) Priority: 23.12.2011 AU 2011905410
(43) Date of publication of application: 26.06.2013
(73) Proprietor: Barokes PTY Ltd., Tullamarine Victoria 3043 (AU)
(72) Inventor: Stokes, Gregory John Charles, Keilor, Victoria 3036 (AU); Barics, Steven John Anthony, Tullamarine, Victoria 3043 (AU)
(74) Representative: Andrae Westendorp

(56) References cited:
- WO-A1-03/029089
- WO-A1-2006/026801
- JP-A- 2 076 565
- JP-A- 62 014 777
- JP-A- 2006 062 688
- FERRARINI ET AL.: "Il condizionamento del vino in contenitore d'alluminio", RICERCA VITICOLA ID ENOLOGICA, no. 5, 1992, pages 59-64, XP002675512,
- CHURCH FRED L: "Next aluminium target: Cans for wine, water, juices", MODERN METALS, vol. 36, no. 12, 1 January 1981 (1981-01-01), XP002987675, MODERN METALS PUBL. CO, CHICAGO, US ISSN: 0026-8127

## Description

This invention relates to aluminium containers filled with wine. It also relates to a process for packaging wine and wine products in aluminium containers.

### Background of the Invention

Wine has been produced since the times of the ancient Greeks. It has been stored in many types of containers. These have included timber, pottery and leather. The use of glass bottles has evolved as the preferred storage means for wine, particularly when stored in quantities less than one litre. While bottles are almost universally used, they have the disadvantages of having relatively high weight and being relatively fragile making them difficult to maintain the wines integrity during transport globally.

For beverages other than wine, such as beer and soft drinks, alternative packages such as metal cans and polyethylenetetraphthate (PET) bottles have been widely adopted. These offer advantages of lower weight and greater resistance to breakage. It has been proposed to store wine in such alternative containers. However, attempts to use such packaging types for wine storage and transport globally whilst maintaining its original integrity have been generally unsuccessful. Some very low quality wines are stored in polyvinyl chloride containers with short shelf life and stability.

It is believed that the reasons for this lack of success in canning wine has been the relatively aggressive nature of the materials in wine and the adverse effects of the reaction products of wine and the container on the wine quality, especially taste. Wine is a complex product that typically has a pH in the range 3 to 4. This compares to beer with a pH of 5 or more and many soft drinks with pH 3 or less. However, pH itself is not the sole determinant, and it has been found that carbonated cola drinks with a pH as low as 3 may be adequately stored in PET containers as they are short shelf life products. The low pH is the result of the phosphoric acid content in carbonated cola drinks. This may allow the satisfactory use of pre-coated aluminium cans and PET bottles for these beverages but not for wine or wine products.

In Modern Metals (1981; p28*)* Fred Church suggested packaging wine in two piece aluminium cans by eliminating oxygen from the head space with nitrogen. This early proposal failed to achieve commercial success because the wines were not storage stable.

In 1992 Ferrarini etal in Ricerca Viticola Id Enologicano 8 p59-64 reviewed the packaging of wine in aluminium cans. They also concluded that oxygen in the head space was to be avoided but that corrosion of the can was due to a number of contributing factors which needed to be addressed. Ferrarini noted that high internal pressures tend to accelerate the corrosion process and also stipulated that pasteurization was necessary. Ferrarini et al concluded that by using these recommendations that a specific white wine could be canned, however it had a 100% failure rate after 50 days storage. Therefore these recommendations did not produce a commercially viable product. Again these recommendations failed to provide a solution to the long held problem of canning wine whilst maintaining its integrity in storage and transport and did not result in any commercially successful product. It has been realized that pasteurisation has detrimental effect on the taste and bouquet of wine and this may in addition explain the lack of adoption of the Ferrarini recommendations.

EP-A-1429968 (WO 03/029089 A) disclosed a method of packaging wine in aluminium cans which utilized a combination of selection of wines having upper limits of Sulphates and chlorides, limiting the addition of sulphur dioxide, using a corrosion resistant liner and pressurizing the can. This resulted in an acceptable shelf life.

WO 2006/026801A1 relates to a method of packaging still wine in aluminium containers by preparing wine characterised in that it has less than 35 ppm of free SO₂, less than 300 ppm of chloride anions and less than 800 ppm of sulfate anions, filling the container body with the wine and sealing the container with an aluminium closure such that the gauge pressure within the can is at least 170 kPa and wherein the inner surfaces of the aluminium container are coated with a corrosion resistant coating and wherein the equilibrium head space composition after packaging has the composition: Nitrogen at least 95% w/w, Carbon Dioxide less than 5% w/w, Oxygen less than 2% w/w, and wherein the temperature of the wine at the time of filling the can body is at least 10°C.

Products such as wine and wine based products that are extremely active and aggressive and continuously interactive with their environment require their chemical balance to be created and then maintained in order for the products integrity (sight, aroma and taste) to be delivered intact in the aluminium container to the consumer as the winemaker had intended. With global markets opening for wine, winemakers wish to deliver their products to the global consumer the way they have made the wine. This is extremely difficult in a global market with its varying weather conditions, temperature fluctuations, quality and capability of logistics systems to maintain the wines' integrity until it reaches the consumer. Hence the need for a product that delivers an exact equilibrium to maintain the wines integrity under global transport and storage conditions based on a proven integrated wine packaging system that delivers a consistent quality product every time is required to solve this problem. In addition this product (and the system supporting it) needs to reflect the consumers desire for environmentally sustainable packaging in order to minimise its overall carbon footprint but at the same time allow the delivery of a wine that maintains its integral balance and profile from the winemaker to the consumer no matter where that consumer is located with a stable shelf (up to and over 12 months) has been a long felt commercial requirement for winemakers and wine vendors globally.

Shelf life is defined as the period after packaging during which wine retains its intended appearance, aroma and taste and is likely to be regarded as palatable by a consumer. The concept of shelf life implies that, over time wine can change after packaging from a product showing the attributes of a designed and intended quality or style to a product with a significantly lowered quality or different style. This change is significantly attributable to the packaging medium used, especially in aluminium containers, that the wine is stored and transported in which can negatively impact on these essential wine characteristics commencing once the wine is packaged with significant changes occurring in less than 6 months.

It is an object of this invention to package wine in aluminium containers whereby the quality of the wine does not deteriorate significantly on storage and transport the shelf life remains stable up to and beyond 2 years.

### Summary of the Invention

This invention provides in one form a filled aluminium container containing a wine characterised in that the maximum oxygen content of the head space is 1% v/v and the wine prior to filling is micro filtered and dissolved Oxygen levels throughout the aluminium container filling process are maintained up to 0.5 mg/L. and final levels of dissolved CO₂ are at least 50 ppm for white and sparkling wines and 50 ppm to 400 ppm for red wines, prior to filling the container, wherein the filled aluminium container of wine has a molecular sulphur dioxide content of between 0.4 and 0.8 mg/L.

This invention is predicated on the discovery that controlling levels of dissolved CO₂ in wine are essential in maintaining the wines varietal character. The recommended minimum level of dissolved CO₂ will reduce the oxygen content of the wine and assist with protecting the wine from oxidation during the transport of bulk wine from the winery to the aluminium container filler. For still white wines the preferred dissolved CO₂ is from 50 ppm to 1200 ppm.

This invention is also based on the realization that Oxygen management in wine is a key factor to consider for maintaining wine quality and integrity. Dissolved Oxygen level is the amount of oxygen aeration sustained by the wine at any given time during the wine making process. Surprisingly adherence to Dissolved Oxygen (DO) levels below 0.5 mg/L for canned wines in combination with minimum dissolved CO₂ has been found to be critical in achieving product quality, stability and longevity. Preferably the maximum oxygen content of the head space is 1 % v/v.

Preferably the head space after sealing the container with the closure comprises or has the composition nitrogen 80 - 97 % v/v, and carbon dioxide 2 - 20 % v/v. In a 250 ml container the head space volume is less than 3 ml preferably less than 2 ml and more preferably about 1 ml. Generally the head space volume is less than 1 %, preferably less than 0.5 % of the sealed volume of the container.

Preferably liquid nitrogen is added just prior to the seaming of the closure to the body of the aluminium container.

Alternatively the wine is carbonated before it is filled in the aluminium container whereby the head space after sealing is predominantly carbon dioxide.

The pressure within the aluminium container is preferably maintained at a pressure above 15 psi at 4°C, so that the corrosion resistant lining in the aluminium container is less likely to fracture or crack exposing fissures as a result of external container damage in storage and transport. In addition the walls of the container are less likely to be buckled which can also lead to damaging the internal lining which can then damage the integrity of the wine.

In this invention microfiltration (preferably sterile grade) microfiltration is used to remove bacteria and yeasts from the wine prior to filling. Microfiltration is generally understood as filtration using 1.0 µm pore size and lower. Preferably removal of microbial cells is best achieved by implementing a multistage in line sterile grade membrane filtration system using a grade with fine enough pores to remove all yeast and bacteria likely to be found in wine but not damage the integrity of the wine. The preferred pore diameters for this purpose are about 0.60 µm in the first stage filter housing and in at least one subsequent stage filter housing 0.20 µm to 0.45 µm. Filter integrity testing ensures that the filters ability to retain bacteria has not been compromised and there are no damaged membranes (pores) present that may allow the passage of microbial cells in the wine.

The size of the filter pores indicates the size exclusion characteristics of the filter, i.e. a filter with a pore size of 0.60 µm will filter off particles of above 0.60 µm. The size of the filter pores is indicated for commercially available products and can be determined by standard methods known to the skilled person.

To ensure successful membrane filtration, the filters are sterilised and tested for integrity prior to use. The sterilizing time and temperature regime is preferably 80°C for 20 minutes.

After membrane filtration, successful sterile canning of wine requires filling through sterilised equipment. All equipment, including the onsite wine storage tank downstream from the final membrane filter (lines, valves, filler etc) are preferably sterilised and operated in a sterile state. Preferably the filling heads are sprayed with 70 % ethanol prior to start up and repeated when filler downtime exceeds 10 minutes. Preferably a full sterilization is performed if the filler is subjected to down time longer than 4 hours.

Molecular SO₂ is the form of free SO₂ that has antimicrobial action. International wine organisations and regulatory bodies such as the Australian Wine Research Institute (AWRI) recommends at least 0.825 mg/L of molecular SO₂ in wine to eliminate cell viability.

Sulphur dioxide (SO₂) is an antioxidant that can be added to wine. The addition of SO₂ in this invention is to inhibit the reaction of oxygen with the wine and to prevent damage to the wines integrity; colour, aroma and flavour compounds. This invention is in part based on the discovery that excess levels of Free SO₂ will elevate the wines corrosive effect on the can and can lining used in today's can manufacturing. In addition the inventors have found that it will also affect the nose (odour-sulphidic characters) and the taste (sharp, astringent) of the wine in the finished product. Low levels of Free SO₂ by itself, will reduce the shelf life, stability and quality of the wine in the finished product. Therefore we have invented a product to balance these competing effects on wine in an aluminium container that is outlined in this patent.

In this invention the functions of SO₂ for wine in aluminium containers include the control of microbiological issues and minimise oxidation affects in the wine in an aluminium container. For wine at filling to have a Free SO₂ level of <35 ppm the wine ex winery is preferred to be Free SO₂ level of 38 - 44 ppm this final ppm level dependent on the distance from winery to the filling plant. Free SO₂ depletion rate is approximately 2 - 3 ppm per day during transport and during storage at filling facility this needs to be taken into consideration when preparing the wine for transport from the winery to the filling facility.

At a pH of 3.5, wine with 35 mg/L of free SO₂ contains 0.70 mg/L of molecular SO₂, lower than the recommended AWRI minimum to eliminate cell viability. Wines filled according to this invention will not contain sufficient free SO₂ to eliminate cell viability.

These structured wines will preferably contain sufficient molecular SO₂ to inhibit microbial growth without negatively impacting on the wines integrity in an aluminium container. Given that the primary control mechanisms in place are sterile grade membrane filtration and preferably filler sterilization, this level of molecular SO₂ has been found to be adequate as an adjunct to prevent microbial spoilage.

It is not necessary to use post-packaging pasteurisation (heating) to inactivate microbial cells in the filled aluminium wine containers.

Wine in an aluminium container with low alcohol content is particularly susceptible to microbial spoilage. In this invention where the wines have less than 9% v/v alcohol the antimicrobial agent sorbic acid is added at a level greater than 90 mg/L preferably greater than 120 mg/L. This addition will assist in preventing microbial growth and spoilage of the product in storage and transport.

References to conditions prior to or at the time of filling preferably mean immediately prior to filling or at the time of filling the container.

Preferably the corrosion resistant coating is a thermoset coating and of greater thickness as opposed to the usual industry lining specifications in aluminium containers used to package soft drink and beer that are not suitable for wine/wine products.

Yeasts are the most likely cause of microbial spoilage in packaged wine due to their tolerance of alcohol, low pH and anaerobic conditions. We have discovered that Yeast growth in wine in an aluminium container is inhibited by high volumes of carbon dioxide. Sparkling wine packed according to this invention contains high levels of carbon dioxide, preferably 3.3 - 3.8 volumes. Yeast growth in sparkling wine packaged using the protocols in this invention are extremely unlikely. Preferably the wine is chilled before filling.

The advantages that result from using maximum levels of dissolved oxygen below 0.5 mg/L and minimum levels of dissolved carbon dioxide of at least 50 ppm include:
- Less SO₂ required.
- Shelf life increased
- Less corrosion susceptibility due to low SO₂ levels.
- Increased stability of wine
- Maintain wine profile- nose, taste, colour

This invention may be used for still, carbonated and sparkling wines (including fortified, sweet and semi sweet wines) and also wines mixed with Mineral water, juice, flavours etc.

The reference to the features or protocols of the present invention in the present specification is to be understood to include all possible combinations of the single features unless these features are pure alternatives. Thus, the single features are combinable within the scope of the present invention as determined by the attached claims.

### Detailed Description of the Invention

Preferred embodiments of the invention will now be described.

In filling aluminium containers with wine there is a need to preserve the wine in the state it is in at the time of filling and to guard against microbial deterioration of the wine. In bottled wine sulphur dioxide has been used to control microbial deterioration but corked bottles allow for dissipation of excess sulphur dioxide. In the hermetically sealed environment of an aluminium container too much sulphur dioxide can affect the wine and also lead to corrosion of the container and liner further adversely affecting wine quality and shelf life.

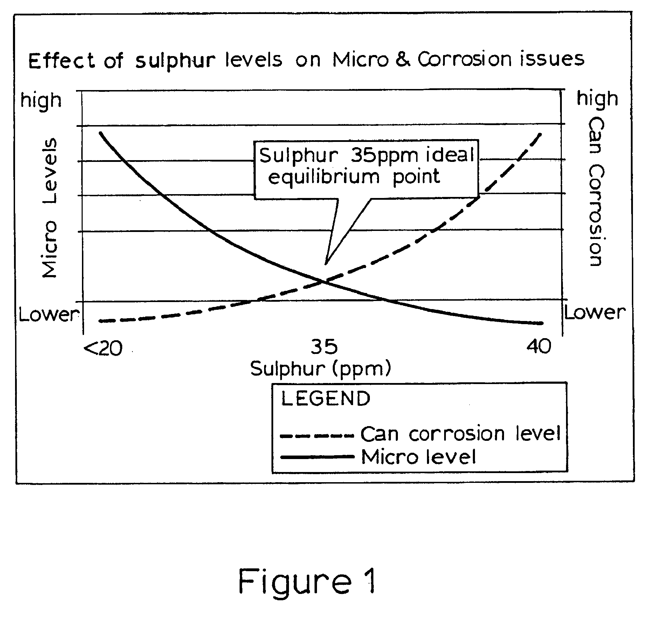

Figure 1 illustrates this problem.

Grape Varieties used in the preferred embodiments of the invention are shown in Table 1.

In all the tables used in this specification, individual results have been combined and averaged. References to ranges of values for pH, free sulphur alcohol content reflect that all of the wines in the specified range had the characteristics observed. All wine analytical results are determined by a world recognised NATA accredited laboratory. All results are issued in accordance with NATA accreditation requirements which include the requirements of ISO/IEC 17025 and are traceable to national standards of measurement.

**Table 1**

| | Grape Variety used in these patented protocols | pH Range | Alcohol Range | Molecular Sulphur Range | Sorbic acid Range |
|---|---|---|---|---|---|
| Still Red | Cabernet | 3.2 to 3.5 | >9% | 0.4 to 0.8 | |
| | Shiraz | 3.2 to 3.5 | >9% | 0.4 to 0.8 | |
| | Merlot | 3.2 to 3.5 | >9% | 0.4 to 0.8 | |
| | Malbec | 3.2 to 3.5 | >9% | 0.4 to 0.8 | |
| | Grenache | 3.2 to 3.5 | >9% | 0.4 to 0.8 | |
| | Zinfandel | 3.2 to 3.5 | >9% | 0.4 to 0.8 | |
| | Tempranillo | 3.2 to 3.5 | >9% | 0.4 to 0.8 | |
| Still White | Chardonnay | 2.9 to 3.5 | >9% | 0.4 to 0.8 | |
| | Sauvignon Blanc | 2.9 to 3.5 | >9% | 0.4 to 0.8 | |
| | Semillon | 2.9 to 3.5 | >9% | 0.4 to 0.8 | |
| | Riesling | 2.9 to 3.5 | >9% | 0.4 to 0.8 | |
| | Pinot Gris | 2.9 to 3.5 | >9% | 0.4 to 0.8 | |
| | Chenin Blanc | 2.9 to 3.5 | >9% | 0.4 to 0.8 | |
| Sparkling Red | Shiraz | 3.2 to 3.5 | >9% | 0.4 to 0.8 | |
| | Pinot Noir | 3.2 to 3.5 | >9% | 0.4 to 0.8 | |
| | Cabernet | 3.2 to 3.5 | >9% | 0.4 to 0.8 | |
| | Merlot | 3.2 to 3.5 | >9% | 0.4 to 0.8 | |
| | Durif | 3.2 to 3.5 | >9% | 0.4 to 0.8 | |
| Sparkling White | Pinot Noir | 2.9 to 3.5 | >9% | 0.4 to 0.8 | |
| | Pinot Meunier | 2.9 to 3.5 | >9% | 0.4 to 0.8 | |
| | Chardonnay | 2.9 to 3.5 | >9% | 0.4 to 0.8 | |
| | Pinot Blanc | 2.9 to 3.5 | >9% | 0.4 to 0.8 | |
| | Riesling | 2.9 to 3.5 | >9% | 0.4 to 0.8 | |
| | Glera (Prosecco) | 2.9 to 3.5 | >9% | 0.4 to 0.8 | |
| | Cava grape varieties | 2.9 to 3.5 | >9% | 0.4 to 0.8 | |
| Sparkling Rose | Combination of Red & White varieties outlined above | 2.9 to 3.5 | >9% | 0.4 to 0.8 | |
| Low alcohol and wine based products | Moscato | 2.9 to 3.5 | <9% | 0.4 to 0.8 | >90mg/L |
| | Muscat Blanc | 2.9 to 3.5 | <9% | 0.4 to 0.8 | >90mg/L |
| | Chianti | 2.9 to 3.5 | <9% | 0.4 to 0.8 | >90mg/L |
| | Sangria | 2.9 to 3.5 | <9% | 0.4 to 0.8 | >90mg/L |
| | Most varieties as detailed in Table 14.-Pending style requirements | 2.9 to 3.5 | <9% | 0.4 to 0.8 | >90mg/L |

### Wine Filling Protocols

Commencing with the rinsing of the aluminium container for wine pre- filling and following on to the aluminium container post filling and then the rinsing of the container via the warming tunnel, all these procedures require the interaction of the water with either the empty container or the filled finished product.

Water is the most strictly controlled ingredient from a regulatory perspective. It must be potable (safe) and palatable (good tasting).

Water can have a direct impact on the sensory profile and stability of wine in an aluminium container. This will occur if hoses and filters are not washed with quality filtered water. This will also occur if process equipment is not rinsed with clean quality filtered water.

Treated water for filter washing and filling machine washing in this invention:
- Must meet all applicable local standards and guidelines.
- Must meet the health-based guideline values of the World Health Organization (WHO).
- Must meet all requirements that are product-specific as they relate to stability, shelf-life, and sensory profile of all wine in an aluminium container.

In addition, treated water preferably will comply with the maximum level of constituents in Table 2.

**Table 2**

| **Constituent** | **Maximum** |
|---|---|
| Alkalinity | 50 mg/l |
| Sulfate | 250 mg/l |
| Chloride | 250 mg/l |
| Total dissolved solids | 500 mg/l |
| Iron | 0.1 mg/l |
| Manganese | 0.05 mg/l |
| Colour | none (5 Co-Pt units max) |
| Turbidity | none (1 NTU max) |
| Chlorine/disinfectant | none |
| Taste | no off-taste |
| Odour | none (T.O>N> = 1) |

Chlorine may be used to sanitise equipment but it is preferably completely removed by rinsing with water prior to use of the equipment with wine.

Rinsing of empty aluminium containers with oxidants prior to use can create residues that react with SO₂. The protocol is that aluminium containers are preferably rinsed with filtered water only.

Pre filling: Should the water quality fall below the listed specifications above the resulting possible increased microbiological load would negatively impact on the integrity of the wine quality, stability and longevity of the filled product. Increased microbiological load would also deplete the Free SO₂ levels in the wine resulting in shorter shelf life, stability and an extra potential for spoilage on storage and transport.

Post filling; should the water quality fall below the listed specifications above the resulting possible increased microbiological load would affect the integrity of the can/container lid tab score lines, resulting in 'leakers' and or exploding aluminium containers. We have discovered that this increased microbiological loads effect on the aluminium container has been responsible for the loss of entire shipments of wine in aluminium containers causing significant commercial damage.

Additionally without proper water quality management there is a potential for mould formation to occur in any crevice of the container. This microbiological issue is also responsible for increasing the spoilage from leakers in storage and transport. A preferred sterile grade filter pore diameter for this purpose is 0.30 µm - 0.45 µm as part of this invention of an integrated wine packaging system to control these microbiological issues in wine in aluminium containers. Preferably the levels for Total Plate Count, Yeasts and Moulds and Lactobacillus are all <1.

The limits and processes of this invention ensure that all products are microbiologically stable without impacting on wines integrity - its key notes (sight, nose and taste) that can damage the commerciality of the product.

Pasteurisation can also damage the key notes (integrity) of wine in an aluminium container.

Tables 3a and 3b below outlines effects of microbiological growth and sulphur levels we have discovered impacts on the integrity of the wine when packaged in an aluminium can/container that this inventive step outlined in the patent protocols solves. Table 3a illustrates Wine parameters (Organoleptic, Corrosion, Microbiological) at a pH of 2.9 to < 3.5 and >9 % alcohol.

**Table 3a.**

| Free SO₂ (ppm) | | Wine parameters (Organoleptic, Corrosion, Microbiological) at a pH of 2.9 to < 3.5 and >9% alc/vol | | | | | | |
|---|---|---|---|---|---|---|---|---|
| | pH | Alc/vol | Parameter | Initial | 6 months | 12 months | 18 months | 24 months |
| < 10 | 2.9 to < 3.5 | >9% | Organoleptic | Fresh and clean | Dull Flat | Oxidation | Reductive characters | Spoiled |
| | | | Corrosion | nil corrosion | nil corrosion | nil corrosion | nil corrosion | nil corrosion |
| | | | Microbiological <1cfu | Microbiological <1cfu | Microbiological<1 cfu | Microbiological <1cfu | Microbiological <1cfu | Microbiological <1cfu |
| | | | Microbiologic Al 1>1cfu | Monitor SO₂ depletion | Increased microactivity. Continued Free SO₂ depletion | Minimal FreeSO₂ level | 'Blown' cans. Spoiled | Testing ceased |
| 10-35 | 2.9 to < 3.5 | >9% | Organoleptic | Fresh and clean | Fresh and clean | Fresh and clean | Fresh and clean | Fresh and clean |
| | | | Corrosion | nil corrosion | nil corrosion | nil corrosion | nil corrosion | nil corrosion |
| | | | Microbiological <1cfu | Microbiological<1cfu | Microbiological<1cfu | Microbiological <1cfu | Microbiological <1cfu | Microbiological <1cfu |
| | | | Microbiological >1cfu | Monitor SO₂ depletion | Monitor SO₂ depletion | Continued SO₂ depletion | Stabilised FreeSO₂ levels | Stabilised FreeSO₂ levels |
| 35-40 | 2.9 to < 3.5 | >9% | Organoleptic | Slight SO₂ nose. Sharp taste | Slight SO₂ nose. Sharp taste | Sharp taste. Sulphur nose | Sulphur nose | Slight Sulphur smell. Astringent |
| | | | Corrosion | nil corrosion | No corrosion observed | No corrosion observed | Random pinholes | Increased pinholes |
| | | | Microbiological <1cfu | Microbiological <1cfu | Microbiological <1cfu | Microbiological <1cfu | Microbiological <1cfu | Microbiological <1cfu |
| | | | Microbiological >1cfu | Monitor SO₂ depletion | Diminishing FreeSO₂ levels | Stabilised FreeSO₂ levels | Stabilised FreeSO₂ levels Micro<1cfu | Stabilised FreeSO₂ levels Micro<1cfu |
| 40+ | 2.9 to < 3.5 | >9% | Organoleptic | Slight Sulphur smell. Astringent | Slight Sulphur smell. Astringent | Slight Sulphur smell. Astringent | Slight pungent aroma | Burnt rubber nose. Bitter |
| | | | Corrosion | Nil corrosion | No corrosion observed | Pinholes appearing | Increased pinholes | Lining breakdown. |
| | | | Microbiological <1cfu | Microbiological <1cfu | Microbiological <1cfu | Microbiological <1cfu | Microbiological <1cfu | Microbiological <1cfu |
| | | | Microbiological >1cfu | Monitor SO₂ depletion | Diminishing Free SO₂ levels | Stabilised Free SO₂ Micro<1cfu | Microbiological <1cfu | Microbiological <1cfu |

| | | | | | | | | |
|---|---|---|---|---|---|---|---|---|
| * SO₂ levels measured at the time of filling | | | | | | | | |

Table 3b below shows organoleptic results with varying microbial levels;

**Table 3b**

| Micro results | | | | | | | | |
|---|---|---|---|---|---|---|---|---|
| TPC, Yeast and Mould, lacto | Alc/vol | pH | initial | 6 months | 9 months | 12 months | 18 months | 24 months |
| <1 | >9% | 2.9 to <3.5 | Fresh Full taste | Fresh Full taste | Fresh Full taste. Clear | Fresh Full taste. Clear | Fresh Full taste. | Fresh Full taste. |
| >1 | >9% | 2.9 to <3.5 | | | Minor loss of flavour | | Blown aluminium containers | Blown aluminum containers |
| | | | Fresh Full taste | Fresh Full taste Diminished Free SO₂ levels | Continued FreeSO₂. depletion Secondary fermentation occurring | Oxidised Reductive characters. Spoiled. | | |
| | | | | | | Test finalised | | |

**Filtration according to a preferred example:** Two stage in line sterile filtration microbiological control system.

### Wine Filter Management

This invention does not utilise post-packaging pasteurisation (heating) to inactivate microbial cells. Rather, microbial cells are removed prior to filling. The removal of microbial cells is achieved by (membrane) filtration using a sterile grade with fine enough pores to remove yeast and bacteria likely to be found in wine.

A multistage filtration method is used with preferably two stages but additional stages may be used.

Filters (according to one preferred embodiment)

Stage 1; 0.60 µm filters are preferably used as primary filters to remove yeast cells from the wine to prevent yeast build up and spoilage including the significant risks associated with any secondary fermentation inside the container.

The use of the first (e.g. 0.60 µm filter) filtration level is essentially to microbiologically stabilize the wine by removing and controlling the reformation of foreign and cultured organisms and removal of bacteria and yeast cells. This stage is designed to remove the majority of bacteria and yeast cells in the wine without damaging the wines integrity.

Stage 2. 0.30 µm-0.45 µm sterile grade filter is preferably used in the subsequent filtration of the wine prior to filling to prevent microbiological issues occurring in the wine in an aluminium container finished product.

The second stage (e.g. 0.30 µm - 0.45 µm) is to guarantee sterility whereby the bacteria and yeast cells are completely removed and the potential for secondary fermentation and spoilage occurring in the filled wine in an aluminium container is eliminated. Again the requirement is not to damage the wines integrity. Once this stage is complete it removes the likelihood of any secondary fermentation occurring inside the aluminium wine container that could result in it exploding during storage and transport. This secondary fermentation can also be the cause of 'leakers'.

This system eliminates the need to use pasteurisation to microbiologically stabilise the wine which would negatively impact on the wines integrity but is not required with this invention;

The Tables below outline the results of wine constructed using these protocols outlined in this patent;

Table 4a shows organoleptic Results with Two Stage microbiological filtration and zero (<5) Free SO₂;

Table 4b shows organoleptic results - zero microbiological filtration;

Table 4c shows organoleptic results Red (still and sparkling) wine with two stage sterile grade microbiological filtration;

Table 4d shows organoleptic results White wine (still and sparkling) with two stage sterile grade Microbiological filtration.

**TABLE 4 a**

| **Organoleptic Results - Micro filtration with zero (<5) Free SO₂** | | | | | | | |
|---|---|---|---|---|---|---|---|
| Wine - Zero Free SO₂ ppm | Alc/vol | pH | initial | 3 months | 6 months | 9 months | 12 months |
| <5 | >9% | 2.9 to<3.5 | Fresh Full taste. | Diminished characters. | Oxidised | Spoiled Off. Expired. | Expired |

| | | | | | | | |
|---|---|---|---|---|---|---|---|
| * SO₂ levels measured at the time of filling | | | | | | | |

**Table 4b**

| Organoleptic Results - zero micro filtration | | | | | | | | | |
|---|---|---|---|---|---|---|---|---|---|
| Wine - Free SO₂ ppm | Alc/vol | pH | Initial | 3 months | 6 months | 9 months | 12 months | 18 months | 24 months |
| <5 | >9% | 2.9 to<3.5 | Fresh Full taste | Diminished characters. Cloudy Micro issues. Blown aluminium containers. | Spoiled Off. Expired. | Expired. | Expired. | Expired. | Expired. |
| 20 | >9% | 2.9 to<3.5 | Fresh Full taste | Diminishing Free SO₂ levels | Diminished Free SO₂ levels. Flat. Oxidised. Blown aluminium containers | Expired. | Expired. | Expired. | Expired. |
| 30 | >9% | 2.9 to<3.5 | Fresh Full taste | Diminishing FreeSO₂ levels | Diminishing Free SO₂ levels | Spoiled Off. Expired. | Expired. | Expired. | Expired. |
| 40 | >9% | 2.9 to<3.5 | Fresh Full taste | Slight SO₂ aroma | Diminishing Free SO₂ levels. Astringent | Diminished Free SO₂ levels Spoiled Off. Expired | Expired. | Expired. | Expired. |
| 50 | >9% | 2.9 to<3.5 | Sulphur Aroma. Slight sharpness on the tongue. | Sulphidic characters bitter taste. Diminishing FreeSO₂ levels. | Diminishing Free SO₂ levels. H2S dominant | Cloudy Diminishing Free SO₂ levels. Bitter taste | Diminished Free SO₂ levels. Spoiled Off. Expired | Expired. | Expired. |

| | | | | | | | | | |
|---|---|---|---|---|---|---|---|---|---|
| * SO₂ levels measured at the time of filling | | | | | | | | | |

**Table 4c**

| Organoleptic Results | Alc/vol | | | | | | | | | |
|---|---|---|---|---|---|---|---|---|---|---|
| Filter Grade-µm | >9% | pH | Molecular SO₂ | initial | 3 month | 6 month | 9 month | 12 month | 18 month | 24 month |
| 1.0 | >9% | 2.9 to<3.5 | 0.4 to 0.8 | Fresh Full taste | Minor loss of flavour Refermentation | Volatile Acid characters Issues Blown aluminium | Spoiled off | Expired | Expired | Expired. |
| 0.60 | >9% | 2.9 to<3.5 | 0.4 to 0.8 | Fresh Full taste | Fresh Full taste | Slight cloudiness | Refermentation issues | Spoiled off | Blown aluminium containers | Expired |
| Two stage micro filtration (0.60 µm-0.45 µm) | >9% | 2.9 to<3.5 | 0.4 to 0.8 | Fresh Full taste | Fresh Full taste | Fresh Full taste | Fresh Full taste | Fresh Full taste | Fresh Full taste | Fresh Full taste |
| Two stage micro filtration (0.60 µm-0.30 µm) | >9% | 2.9 to<3.5 | 0.4 to 0.8 | Fresh Full taste | Fresh Full taste | Fresh Full taste | Fresh Full taste | Fresh Full taste | Fresh Full taste | Fresh Full taste |
| 0.45 | >9% | 2.9 to<3.5 | 0.4 to 0.8 | Filter blockage. Fine sediment in the wine. Unacceptable 'gritty' Mouth feel. Higher Free SO₂ levels. Slight SO₂ aroma. | Sulphidic characters. Astringent. | Sediment in the bottom of can. Bitter taste | Metallic taste | Spoiled off | Not fit for consumption | |
| <0.30 | >9% | 2.9 to<3.5 | 0.4 to 0.8 | Varietal flavour loss. Colour less intense. Filter blockage. | | | | | | |

| | | | | | | | | | | |
|---|---|---|---|---|---|---|---|---|---|---|
| * SO₂ levels measured at the time of filling | | | | | | | | | | |

**Table 4d.**

| Organoleptic Results | Alc/vol | | | | | | | | | |
|---|---|---|---|---|---|---|---|---|---|---|
| Filter Grade -µm | >9% | pH | Molecular SO₂ | initial | 3 months | 6 months | 9 months | 12 months | 18 months | 24 months |
| 1.0 | >9% | 2.9 to<3.5 | 0.4 to 0.8 | Fresh Full taste | Minor loss of flavour Oxidative characters | Refermentation Issues; Blown aluminium containers | Spoiled off | Expired | Expired | Expired. |
| 0.60 | >9% | 2.9 to<3.5 | 0.4 to 0.8 | Fresh Full taste | Fresh Full taste | Slight cloudiness | Refermentation issues | Spoiled off | Blown aluminium containers | Expired |
| Two stage micro filtration (0.60 µm- 0.45 µm) | >9% | 2.9 to<3.5 | 0.4 to 0.8 | Fresh Full taste | Fresh Full taste | Fresh Full taste | Fresh Full taste | Fresh Full taste | Fresh Full taste | Fresh Full taste |
| Two stage micro filtration (0.60 µm-0.30 µm) | >9% | 2.9 to<3.5 | 0.4 to 0.8 | Fresh Full taste | Fresh Full taste | Fresh Full taste | Fresh Full taste | Fresh Full taste | Fresh Full taste | Fresh Full taste |
| <0.30 | >9% | 2.9 to<3.5 | 0.4 to 0.8 | Varietal flavour loss. Colour less intense. Filter blockage. | | | | | | |

| | | | | | | | | | | |
|---|---|---|---|---|---|---|---|---|---|---|
| * SO₂ levels measured at the time of filling | | | | | | | | | | |

Final filtration using filters with pore sizes of 0.60 µm + 0.45 µm, 0.60 µm + 0.30 µm or 0.60 µm + 0.20 µm allows sterile filtration be achieved. Using the 0.20 µm pore size filter may be applicable however the likelihood of stripping the wine of colour and flavour is increased and therefore may not be suitable in some cases.

A single 0.45 filtration of the wine
- would enhance the risk of live cells being forced through the filter and into the finished wine.
- Require extra SO₂ dosing to offset the risk of higher micro organism and yeast levels in the wine which would require an increase in free SO₂ levels
- Shelf life of the wine in an aluminium container would be diminished (less than 12 months) due to the increased corrosive effect of high SO₂ levels.
- Wine would develop sulphidic (H₂S) characters.
- Without the addition of extra SO₂ the wine would be subject to a greater risk of refermentation in the aluminium container (from the yeast cells) and spoilage (bacteria cells)
- would enhance the risk of fine sediment escaping into the finished wine. This would eventually show up (approximately 6 - 12 months) in the bottom of the aluminium container. Totally unacceptable to the consumer (a gritty mouth feel).

Correct filter and filter housing preparation is a key protocol to successful wine in an aluminium container production.

The inventors have found that for wine in an aluminium container poorly sanitised or prepared wine filters and filter housings will lead to microbiological complications within the wine in the container.

During storage, the sterile grade filters are preferably stored in a solution of 1% Citric Acid with 50 ppm Free SO₂. This is preferably made fresh and repeated on a fortnightly basis.

Prior to filling the aluminium container, the filters are preferably sterilised and tested for integrity prior to use.

The preferred sterilising time and temperature regime is 80°C for 20 minutes. The results of trials utilizing the protocols outlined in this patent for microfiltration with varying amounts of added free sulphur are shown in table 5 for a white wine table 6 for a red wine table 7 for a carbonated white wine and table 8 for a carbonated red wine. These wines were prepared according to the protocols outlined in this patent.

**Table 5**

| White wine prepared according to this invention 24 month Appraisal below; | | | | | | | | |
|---|---|---|---|---|---|---|---|---|
| Organoleptic Results | | | | | | | | |
| Wine-Free SO₂ ppm* | Al c/vol | pH | initial | 3 months | 6 months | 12 months | 18 months | 24 months |
| 10 | >9% | 2.9 to<3.5 | Fresh Full taste | diminished characters | Dull Oxidised | Flat/Advanced VA | Spoiled | OFF |
| 20 | >9% | 2.9 to<3.5 | Fresh Full taste | diminished characters | Flat | Oxidised | Reductive characters. | Spoiled |
| 30 | >9% | 2.9 to<3.5 | Fresh Full taste | Fresh Full taste | Fresh Full taste | Fresh Full taste | Fresh Full taste | Developed characters. |
| 35 | >9% | 2.9 to<3.5 | Fresh Full taste | Fresh Full taste | Fresh Full taste | Fresh Full taste | Fresh Full taste | Fresh Full taste |
| 40 | >9% | 2.9 to<3.5 | Fresh Full taste | Slight SO₂ aroma | Astringent | Increased sulphur nose | Sulphidic characters. Slight bitterness | Sulphidic characters. Advanced bitterness |
| 50 | >9% | 2.9 to<3.5 | Sulphur Aroma | Sulphidic characters bitter taste | H₂S dominant Flat | High sulphur nose. | Spoiled/ Off | Not fit for consumption |

| | | | | | | | | |
|---|---|---|---|---|---|---|---|---|
| * SO₂ levels measured at the time of filling | | | | | | | | |

**Table 6. Red wine prepared according to this invention 24 month appraisal below;**

| Organoleptic Results | | | | | | | | |
|---|---|---|---|---|---|---|---|---|
| Wine-Free SO₂-ppm* | Al/vol | pH | initial | 3 months | 6 months | 12 months | 18 months | 24 months |
| 10 | >9% | 2.9 to<3.5 | Fresh Full taste | diminished characters | Dull. Oxidised | Flat /Advanced VA | Spoiled | OFF |
| 20 | >9% | 2.9 to<3.5 | Fresh Full taste | diminished characters | Flat | Diminished varietal character | Oxidised | Reductive characters. |
| 30 | >9% | 2.9 to<3.5 | Fresh Full taste | Fresh Full taste | Fresh Full taste | Fresh Full taste | Fresh Full taste | Developed characters. |
| 35 | >9% | 2.9 to<3.5 | Fresh Full taste | Fresh Full taste | Fresh Full taste | Fresh Full taste | Fresh Full taste | Fresh Full taste |
| 40 | >9% | 2.9 to<3.5 | Fresh Full taste | Slight SO₂ aroma | Astringent | Increased sulphur nose | Sulphidic characters. Slight bitterness | Sulphidic characters. Advanced bitterness |
| 50 | >9% | 2.9 to<3.5 | Sulphidic characters bitter taste | H₂S dominant Flat | Spoiled/ Off | Expired | Expired | Sulphurous odour not fit for consumption |

| | | | | | | | | |
|---|---|---|---|---|---|---|---|---|
| * SO₂ levels measured at the time of filling | | | | | | | | |

**Table 7**

| Organoleptic Results | | | | | | | | |
|---|---|---|---|---|---|---|---|---|
| Wine -Free SO₂-ppm* | Alc/vol | pH | initial | 3 months | 6 months | 12 months | 18 months | 24 months |
| 10 | >9% | 2.9 to<3.5 | Fresh Full taste | diminished characters | Dull. Oxidised | Flat/Advance d VA | Spoiled | Off |
| 20 | >9% | 2.9 to<3.5 | Fresh Full taste | diminished characters | Flat | Reductive Characters | Oxidised | Developed Character characters. |
| 30 | >9% | 2.9 to<3.5 | Fresh Full taste | Fresh Full taste. Crisp | Fresh Full taste | Fresh Full Taste | Fresh Full taste | Developed characters. |
| 35 | >9% | 2.9 to<3.5 | Fresh Full taste | Fresh Full taste | Fresh Full taste | Fresh Full taste | Fresh Full taste | Fresh Full taste |
| 40 | >9% | 2.9 to<3.5 | Fresh Full taste | Slight SO₂ aroma | Astringent | Increased sulphur nose | sulphursulphidic characters. Slight bitterness | Sulphidic characters. Advanced bitterness |
| 50 | >9% | 2.9 to<3.5 | Sulphur Aroma | Sulphidic characters bitter taste | H₂S dominant Flat | Spoiled/Off | Expired | Not fit for consumption |

| | | | | | | | | |
|---|---|---|---|---|---|---|---|---|
| * SO₂ levels measured at the time of filling | | | | | | | | |

**Table 8**

| Organoleptic Results | | | | | | | | |
|---|---|---|---|---|---|---|---|---|
| Wine-Free SO₂ ppm* | Alc/vol | pH | initial | 3 months | 6 months | 12 months | 18 months | 24 months |
| 10 | >9% | 2.9 to<3.5 | Fresh Full taste | diminished characters | Dull. Oxidised | Flat/ Advanced VA | Spoiled | Off |
| 20 | >9% | 2.9 to<3.5 | Fresh Full taste | diminished characters | Flat | Oxidised | Reductive characters | Developed characters |
| 30 | >9% | 2.9 to<3.5 | Fresh Full taste | Fresh Full taste. Crisp | Fresh Full taste | Fresh Full taste | Fresh Full taste | Developed characters |
| 35 | >9% | 2.9 to<3.5 | Fresh Full taste | Fresh Full taste | Fresh Full taste | Fresh Full taste | Fresh Full taste | Fresh Full taste |
| 40 | >9% | 2.9 to<3.5 | Fresh Full taste | Slight SO₂ aroma | Astringent | Increased sulphur nose | Sulphidic characters. Slight bitterness | Sulphidic characters. Advanced bitterness |
| 50 | >9% | 2.9 to<3.5 | Sulphur Aroma | Sulphidic characters bitter taste | H₂S dominant Flat | Spoiled Off. | Expired | Not fit for consumption |

| | | | | | | | | |
|---|---|---|---|---|---|---|---|---|
| * SO₂ levels measured at the time of filling | | | | | | | | |

The Total SO₂ in wine (the total amount of Free and bound SO₂) is directly related to the levels of SO₂ added during the wine making process and during the storage of the wine at the winery.

Wine making practices in accordance with this invention require the avoidance of oxygen interaction throughout the entire winemaking process thereby limiting the continued addition of SO₂.

Acetaldehyde is caused by excessive oxidation of the wine.

The addition of SO₂ to the 'oxidised' wine will bind the acetaldehyde, removing its volatile presence and resulting in a wine with a "fresher" aroma.

Surprisingly this invention limits the frequency of oxidation and will greatly reduce the requirement for SO₂ addition. This is the opposite to the usual commercial winemaking procedures practiced globally.

According to one embodiment of the invention, the wine contains from 32 to 35 mg/L of free SO₂ at the time of filling.

"ppm" values, according to a preferred embodiment, refer to weight per volume unless otherwise indicated. Table 9 shows the organoleptic assessment of Total SO₂ in wine prepared according to the method of this invention;

**Table 9**

| Organoleptic Results | | | | | | | | |
|---|---|---|---|---|---|---|---|---|
| Total SO₂ ppm | Alc/vol | pH | initial | 6 months | 9 months | 12 months | 18 months | 24 months |
| 100 | >9% | 2.9 to<3.5 | Fresh Full taste | Fresh Full taste | Fresh Full taste. Clear | Fresh Full taste. Clear | Fresh Full taste. | Fresh Full taste |
| 250 | >9% | 2.9 to<3.5 | Fresh Full taste | Fresh Full taste | Fresh Full taste. Clear | Fresh Full taste | Minor loss of flavour | Volatile Acid characters |
| 300 | >9% | 2.9 to<3.5 | Fresh Full taste | Dull | Stringent. Flat | Volatile Acid characters | Strong Volatile Acid characters | Acetaldehyde spoiled |

### Oxidation:

Oxidation of wine after packaging is caused by reaction of wine components with oxygen. Oxygen can be present in the wine at filling or present in the package headspace at sealing. The dissolved oxygen in the wine at filling and the oxygen in the headspace comprise the total oxygen load at filling. Oxygen can also enter the package after filling.

Oxidation is inhibited by the presence of antioxidant compounds in the wine. The following factors influence the extent and rate of oxidation reactions that take place in the wine after packaging is completed.

Preferably Dissolved Oxygen (DO) levels throughout the filling process are maintained up to 0.5 mg/L. and controlling the final maximum DO levels in the wine is preferred. This is in combination with limiting the oxygen levels entrapped within the headspace of the filled product, will greatly reduce the likelihood of oxidation, corrosion and or degradation of the product.

Dissolved Oxygen level is the amount of oxygen aeration sustained by the wine at any given time during the wine making process. These levels generally diminish as the wine consumes oxygen and oxidation results. Therefore the greater the DO levels at any given time in the wine the greater likelihood of increased oxidation. The outlined winemaking procedures ensure that the likelihood of oxygen coming into contact with the wine is inhibited. Under this system Oxygen management in wine is a key factor to consider for maintaining wine quality and integrity.

Strict adherence to Dissolved Oxygen (DO) specifications is critical in achieving product quality, stability and longevity. It is preferred to maintain as close to zero headspace in all vessels involved in the winemaking process to eliminate any possible oxygen element affecting the wine.

The integrated system outlined in this patent also manages this issue at filling by avoiding aeration of the wine via faulty fittings and /or avoidance of aeration of the wine at low temperatures as the absorption of oxygen is far greater at lower temperatures.

Wine in tank prepared for filling can contain significant amounts of dissolved oxygen. Oxygen can also enter wine during delivery from the tank to the filler and during the filling process.

Any dissolved oxygen in the wine at filling is available for oxidation reactions with wine in the package, potentially limiting shelf life.

Dissolved oxygen in wine at filling may be achieved by controlling the maximum wine dissolved oxygen content in tank prior to fill and after delivery of wine into the package.

In the method of this invention the dissolved oxygen may be minimised in wine in the tank prior to filling by sparging the wine with nitrogen gas.

### Sparging

This system minimizes the negative influence of Dissolved Oxygen in the wine with the use of sparging with nitrogen gas prior to filling. It is a benefit of this invention that dissolved oxygen reduction for wine in an aluminium container achieves stability, extended shelf life and maintains the wines integrity under production, storage and transport.

Excessive sparging may result in damage to the wines integrity by reducing the flavour profile and imparting a bitter character presumably caused by dissolved nitrogen. Therefore, according to a preferred embodiment, the amount of nitrogen used for sparging is between 0.1 and 0.8 liter N₂ per liter of wine.

Preferably dissolved oxygen at winery and after wine transfer to tanker is less than 0.5 mg/L. Preferably the dissolved oxygen in storage tank at filling facility prior to canning is less than 0.5 mg/L.

Preferably the maximum wine dissolved oxygen content is less than 0.5 mg/L after filling of the wine into the container. This preferred maximum level will prevent significant loss of shelf life due to oxygen dissolved in the wine at filling.

The tables below illustrate the organoleptic assessment of Dissolved Oxygen in wine.

Table 10a shows Red Wine - Dissolved Oxygen levels prepared according to the invention and without the DO controls of this invention

Table 10b shows White Wine - Dissolved Oxygen levels prepared according to the invention and without the DO controls of this invention

Note; SO₂ levels in the tables below -10a & b are measured at the time of filling

**Table 10a**

| Organoleptic Results | | | | | | | | | |
|---|---|---|---|---|---|---|---|---|---|
| Wine - DO levels | Molecular SO₂ | alc/vol | pH | initial | 3 months | 6 months | 12 months | 18 months | 24 months |
| <0.5 | 0.4 to 0.8 | >9% | 2.9 to <3.5 | Fresh Bright colour | Fresh Crisp clean | Fresh Lively. Full flavour | Fresh Good nose. Clear bright | Fresh Sustained wine character | Fresh Sustained wine character |
| Non DO controlled wine 1.0 | 0.4 to 0.8 | >9% | 2.9 to <3.5 | Fresh | Fresh | Colour enhanced Reductive characters | Over developed Oxidised | Spoiled | Spoiled |
| Non DO controlled wine 1.5 | 0.4 to 0.8 | >9% | 2.9 to <3.5 | Fresh | Reductive characters | Over developed | Reductive characters Oxidised | Spoiled | Expired |

**Table 10b**

| Organoleptic Results | | | | | | | | | |
|---|---|---|---|---|---|---|---|---|---|
| Wine -DO levels | Molecular SO₂ | alc/vol | pH | initial | 3 months | 6 months | 12 months | 18 months | 24 months |
| <0.5 | 0.4 to 0.8 | >9% | 2.9 to <3.5 | Fresh Bright colour | Fresh Crisp clean | Fresh Lively. Full flavour | Fresh Good nose. Clear bright | Fresh Sustained wine character | Fresh Sustained wine character |
| Non DO controlled wine 1.0 | 0.4 to 0.8 | >9% | 2.9 to <3.5 | Fresh | Reductive characters | Colour enhanced | Over developed Oxidised | Spoiled | Spoiled |
| Non DO controlled wine 1.5 | 0.4 to 0.8 | >9% | 2.9 to <3.5 | Fresh | Reductive characters | Over developed | Reductive characters Oxidised | Spoiled | Expired |

### Dissolved Carbon Dioxide (DCO₂)

Carbon dioxide is naturally created during the wine fermentation process. During the maturation of the wine in storage most of the dissolved CO₂ has been completely depleted or to acceptable levels of 'spritz' (400 ppm - 800 ppm).

Preferably all wine is cross flow filtered to ensure the dissolved CO₂ level of the wine is not the result of microbial infection.

It is an important aspect of this invention that the recommended level of dissolved CO₂ will reduce the oxygen content of the wine and assist with protecting the wine from oxidation during the transport of bulk wine from the winery to the aluminium container filler. This is particularly important because by preventing oxidation, minimal free SO₂ addition is required and minimum free SO₂ levels are maintained at the winery prior to dispatch.

The recommended level of dissolved CO₂ for wine is relevant as wine during transport is rarely refrigerated (eg. be it in ISO tankers - 26,000 litres, Flexi tanks - 24,000 litres or road tanker transport - various compartmentalized/litreage volumes) consequently the temperature of the wine increases and the potential for yeast activity enhanced. During this transit time the wine is also susceptible to oxidation by extended contact with air via faulty seals and closures.

Additionally the dissolved CO₂ will prevent further oxidation of the wine caused by the effects of ullage (namely the gap - air in the headspace) created in any one particular tanker compartment by either under filling, evaporation or leakage of the wine during transit.

The levels of the actual CO₂ in the wine and resultant effectiveness will diminish as the temperature of the wine increases (during transport). However the initial level of dissolved CO₂ in the wine at the winery ensure that the wine will arrive at its destination in the same condition as when dispatched from the winery and with preferred final levels of dissolved CO₂ of 50 ppm - 1200 ppm for still white wines and 50 ppm to 400 ppm for still red wines prior to can filling.

The combination of maximum dissolved oxygen minimum dissolved carbon dioxide levels with microfiltration allows lower free SO₂levels and inhibits wine spoilage as the potential for oxidation, microbiological spoilage and re-fermentation are far greater during wine transport and wine transfer than in storage at the winery. In addition, it is impossible to perform any corrective procedures during transit.

The recommended specific levels of dissolved CO₂ in wine are essential in maintaining the wines varietal character.

The preferred range of dissolved CO₂ for still red wine is 50 ppm to 400 ppm more preferably 200 ppm to 400 ppm as higher levels will create a sharper more aggressive tannic tasting wine.

The preferred range of dissolved CO₂ for still white wines is 50 ppm to 1200 ppm (dependent on varietal character of the wine and the level of freshness and crispness required) and preferably is 400 ppm to 800 ppm. For sparkling wines the upper limit of dissolved CO₂ is greater but is not critical.

Preferably the dissolved CO₂ level at the winery and after wine transfer to tanker is 0.8 - 1.2 g/L (800 ppm - 1200 ppm).

Preferably the dissolved CO₂ in storage tank at filling facility prior to canning is up to 1.2 g/L (1200 ppm). For still red wines this is preferably up to 0.4 g/L(400 ppm). This preferred maximum level will prevent significant loss of shelf life due to minimising oxidation potential during bulk wine transport and the resultant oxidation of the packaged product during storage and transport.

Table 11a. shows for red wine the effect of Dissolved Carbon Dioxide levels

Table 11b. shows for white wine the effect of Dissolved Carbon Dioxide levels

**Table 11a**

| Organoleptic Results | | | | | | | | | |
|---|---|---|---|---|---|---|---|---|---|
| Wine -DCO₂ levels | Molecular SO₂ mg/L | Alc/vol | pH | | | | | | |
| **Prior to filling** | | | | initial | 3 months | 6 months | 12 months | 18 months | 24 months |
| <400 ppm | 0.4 to 0.8 | >9% | 2.9 to <3.5 | Fresh Clean | Fresh Clean | Fresh Clean Balanced | Fresh Clean Balanced Full varietal character | Fresh Clean Full varietal character | Fresh Clean Full varietal character |
| | 0.4 to 0.8 | >9% | 2.9 to <3.5 | Fresh Clean Slight Spritz Sharp taste | Enhanced tannin taste. | Bitter notes. | Unpalatable notes. | Increased tannins. | Non Saleable. |
| 400 ppm-800 pm | | | | | | | | 'tinny taste' | |

| | | | | | | | | | |
|---|---|---|---|---|---|---|---|---|---|
| * SO₂ levels measured at the time of filling | | | | | | | | | |

**Table 11b**

| Organoleptic Results | | | | | | | | | |
|---|---|---|---|---|---|---|---|---|---|
| Wine -DCO₂ levels | Molecular SO₂ mg/L | Alc/vol | pH | | | | | | |
| **Prior to filling** | | | | initial | 3 months | 6 months | 12 months | 18 months | 24 months |
| <400 ppm | 0.4 to 0.8 | >9% | 2.9 to <3.5 | Fresh Clean | Fresh Clean | Reductive characters | Oxidized. | Spoiled | Off. |
| 400 ppm-800 pm | 0.4 to 0.8 | >9% | 2.9 to <3.5 | Fresh Clean | Fresh Clean Balanced | Fresh Clean Balanced | Fresh Clean Balanced Full varietal character | Fresh Clean Full varietal character | Fresh Clean Full varietal character |

| | | | | | | | | | |
|---|---|---|---|---|---|---|---|---|---|
| * SO₂ levels measured at the time of filling | | | | | | | | | |

With sparkling wines that have high CO₂ levels due to secondary fermentation (>6g/L) or carbonation (2-5 g/L) the control of DO levels is still essential.

### Low Alcohol Wine/Wine Products

The preferred level of Sorbic Acid > 90 mg/L protocol is recommended for low alcohol wines (i.e.<9 % ALC/VOL) due to the increased risk of viable yeast cells compared to > 9 % ALC/VOL wines and wines that have not undergone Malolactic fermentation (MLF). Should MLF occur in the wine in the aluminium container an unpleasant odour - geraniol (similar to Geranium) - will result. Due to the hermetically sealed environment, only minimal Potassium Sorbate addition is required. It is important to pay attention to pH, Free SO₂ and alcohol levels prior to the addition of Potassium Sorbate.

Potassium Sorbate under this protocol is preferably used in small quantities in conjunction with potassium metabisulphite in sweet and semi-sweet wines to prevent secondary fermentation. When dissolved in water, Potassium Sorbate breaks down into Sorbic acid and ionic potassium.

This specification is recommended for still, carbonated and sparkling wines (including fortified, sweet and semi sweet wines) and also wines mixed with Mineral water, juice, flavours etc.

Table 12a shows the organoleptic results for low alcohol red wine (<9 %) and zero Sorbic Acid

Table 12b shows the organoleptic results for low alcohol white wine (<9 %) and zero Sorbic Acid

**Table 12a**

| Organoleptic Results - low alcohol wine <9% alc/vol | | | | | | | | |
|---|---|---|---|---|---|---|---|---|
| Sorbic Acid - 0 ppm | Molecular SO₂- mg/L | Alc/vol | pH | initial | 3 months | 6 months | 9 months | 12 months |
| | 0.4 to 0.8 | <9% | 2.9 to <3.5 | Clean Fresh | Slight cloudy appearance | Micro issues Blown aluminium containers. | Increased micro activity. Refermentation of Product. Spoiled | Product not fit for sale. |

| | | | | | | | | |
|---|---|---|---|---|---|---|---|---|
| * SO₂ levels measured at the time of filling | | | | | | | | |

**Table 12b**

| Organoleptic Results - low alcohol wine <9% alc/vol | | | | | | | | |
|---|---|---|---|---|---|---|---|---|
| Sorbic Acid - 0 ppm | Molecular SO₂- mg/L | Alc/vol | pH | initial | 3 months | 6 months | 9 months | 12 months |
| | 0.4 to 0.8 | <9% | 2.9 to <3.5 | Clean Fresh | Slight cloudy appearance | Micro issues Blown aluminium containers. | Increased micro activity. Refermentation of Product. Spoiled | Product not fit for sale. |

| | | | | | | | | |
|---|---|---|---|---|---|---|---|---|
| * SO₂ levels measured at the time of filling | | | | | | | | |

Table 12c shows Organoleptic results for low alcohol Carbonated Red wine (<9%) and zero Sorbic Acid;

Table 12d shows Organoleptic results for low alcohol Carbonated white wine (<9%) and zero Sorbic Acid;

**Table 12c**

| Organoleptic Results - low alcohol wine <9% alc/vol | | | | | | | | |
|---|---|---|---|---|---|---|---|---|
| Sorbic Acid - 0 ppm | Molecular SO₂- mg/L | Alc/vol | pH | initial | 3 months | 6 months | 9 months | 12 months |
| | 0.4 to 0.8 | <9% | 2.9 to <3.5 | Clean Fresh | Slight cloudy appearance | Micro issues Blown aluminium containers. | Increased micro activity. Refermentation of Product. Spoiled | Product not fit for sale. |

| | | | | | | | | |
|---|---|---|---|---|---|---|---|---|
| * SO₂ levels measured at the time of filling | | | | | | | | |

**Table 12d**

| Organoleptic Results - low alcohol wine <9% alc/vol | | | | | | | | |
|---|---|---|---|---|---|---|---|---|
| Sorbic Acid - 0 ppm | Molecular SO2- mg/L | Alc/vol | pH | initial | 3 months | 6 months | 9 months | 12 months |
| | 0.4 to 0.8 | <9% | 2.9 to <3.5 | Clean Fresh | Slight cloudy appearance | Micro issues Blown aluminium containers. | Increased micro activity. Refermentation of Product. Spoiled | Product not fit for sale. |

| | | | | | | | | |
|---|---|---|---|---|---|---|---|---|
| * SO₂ levels measured at the time of filling | | | | | | | | |

Table 13a shows the organoleptic results for low alcohol red wine (<9%) with addition of Sorbic Acid

Table 13b shows the organoleptic results for low alcohol white wine (<9%) with addition of Sorbic Acid

**Table 13a**

| Organoleptic Results - low alcohol wine <9% alc/vol | | | | | | | | | | |
|---|---|---|---|---|---|---|---|---|---|---|
| Sorbic Acid >90 ppm | Molecular SO₂ mg/L | Alc/vol | pH | initial | 3 months | 6 months | 9 months | 12 months | 18 months | 24 months |
| | 0.4 to 0.8 | <9% | 2.9 to<3.5 | | Clean | Fresh | Fresh | Fresh | Fresh | Fresh |
| | | | | Clean Fresh | | clear | clear | clear | clear | clear |

| | | | | | | | | | | |
|---|---|---|---|---|---|---|---|---|---|---|
| * SO₂ levels measured at the time of filling | | | | | | | | | | |

**Table 13b**

| Organoleptic Results - low alcohol wine <9% alc/vol | | | | | | | | | | |
|---|---|---|---|---|---|---|---|---|---|---|
| Sorbic Acid - >90 ppm | Molecular SO₂ mg/L | Alc/vol | pH | initial | 3 months | 6 months | 9 months | 12 months | 18 months | 24 months |
| | 0.4 to 0.8 | <9% | 2.9 to<3.5 | | Clean | Fresh | Fresh | Fresh | Fresh | Fresh |
| | | | | Clean Fresh | | clear | clear | clear | clear | clear |

| | | | | | | | | | | |
|---|---|---|---|---|---|---|---|---|---|---|
| * SO₂ levels measured at the time of filling | | | | | | | | | | |

The wine varieties listed below in table 14 are the wines utilized in the foregoing tables, however the invention is not limited to such particular wines, or specific style nor combination of varieties for which the varietal is selected. See below table of wines capable of being packaged using these protocols. This is a non exhaustive list:

**Table 14**

| | Grape Variety used in these patented protocols | |
|---|---|---|
| Still Red | Cabernet | Petit Verdot |
| | Shiraz | Pinot Noir |
| | Merlot | Tempranillo |
| | Malbec | Tannat |
| | Grenache | Gamay |
| | Zinfandel | Nebbiolo |
| | Sangiovese | Mataro |
| Still White | Chardonnay | Gewurtztraminer |
| | Sauvignon Blanc | Muscat |
| | Semillon | Chenin Blanc |
| | Riesling | Viognier |
| | Pinot Gris | Gruner Veltliner |
| | Chasselas | Verdelho |
| | Colombard | |
| Sparkling Red | Shiraz | Durif |
| | Pinot Noir | Merlot |
| | Cabernet | |
| Sparkling White | Pinot Noir | Macabeo |
| | Pinot Meunier | Xarel-Io |
| | Chardonnay | Parellada |
| | Pinot Blanc | Muller- Thurgau |
| | Riesling | Semillon |
| | Sauvignon Blanc | |
| Low alcohol | Moscato | Muscat Blanc |
| | Most varieties as detailed in Table 13.- Pending style requirements | |

In this specification, reference to values for analytes in wine, gas composition, dimensions, volumes and pressure refer to the values as determined under standard laboratory conditions of 20°C unless the context provides otherwise. Since modifications within the spirit and scope of the invention may be readily effected by persons skilled in the art, it is to be understood that the invention is not limited to the particular embodiment described, by way of example, hereinabove, but only by the scope of the claims.

The analytical methods and test methods used are standard methods known to the skilled person. According to preferred embodiments of the invention, the following methods can be used:
a) Total Plate Count, Lactobacillus and Yeast and mould tests were performed by EML Laboratories, EML Melbourne, 417 - 431 Canterbury Road, Surrey Hills, VIC. 3127 (NATA accredited) as follows: Lactobacillus Method 3.12.6: APHA Compendium of Methods for the Microbiological Examination of Foods 4th Edition; Total Viable Count Method 3.1.15: APHA Compendium of Methods for the Microbiological Examination of Foods 4th Edition; Yeast and Mould Method 3.2.44: EML In House Method.
b) Reference methods for wine analyses as supplied by the Australian Government-National Measurement Institute: National Measurement Institute, 1/153 Bertie Street, Port Melbourne VIC 3207(NATA accredited):

| ANALYZE / TEST | NATA | INTERNAL METHOD | REFERENCE METHOD |
|---|---|---|---|
| Sulphur Dioxide | Yes | VL285 | Pearsons Composition Analysis of Food 8th Ed. |
| | | | Vogel Textbook of Quantitative Chem. Analysis 4th Ed. |
| | | | AOAC 16th Ed. 1995, 962.16 |
| Total Acidity | Yes | VL284 | Titration with NaOH Pearson's Chemical Analysis of Foods 8th Ed 1981 |
| pH | Yes | VL389 | AS2300.1.6_1989 |
| | | | APHA 21 st Ed 2005 Standard Methods for the Examination of Water and Waste Water |
| Metals | Yes | VL247 | USEPA Method 6010B & 6020 |
| Anions | Yes | VL359 | APHA: Standard Methods for the Examination of Water and Waste Water, 2005, 21 st Edition. |

c) An example of testing equipment used for determining the dissolved CO₂ levels (DCO2) is the Hach-Lange Orbisphere® Model 3658, Hach-Lange GmbH, Düsseldorf, Germany, used according to the manufacturer's recommendations.
d) For Dissolved Oxygen (DO) levels, an example of testing equipment is the Hach - Lange Orbisphere® Model 3100, Hach-Lange GmbH, Düsseldorf, Germany, used according to the manufacturer's recommendations.
e) Also, a combination of Orbisphere® Model 29972 beverage package sampler for carbonated liquids without suspended particles, Orbisphere® Model 3658/418 portable CO₂ analyzer, sensor model 31478, RS232 (serial) output, and Orbisphere® Model 3650/113 portable O₂ analyzer, electrochemical sensor, RS232 (serial) output, can be used, according to the manufacturer's recommendations.
f) Volatile Acid-Volatile acidity as acetic acid can be measured by a FOSS FTIR WineScan®, FOSS GmbH, Rellingen, Germany, according to the manufacturer's recommendations, or as acetic acid by enzymatic assay using a Randox Daytona® instrument, Randox Laboratories Ltd., United Kingdom, according to the manufacturer's recommendations. Acetic acid can also be measured using standard HPLC (High Performance Liquid Chromatography). The FOSS FTIR WineScan®, FOSS GmbH, Rellingen, Germany can also be used for SO₂ analysis, according to the manufacturer's recommendations.
g) Alcoholic strength analysis can be performed by near infrared reflectance (NIR)/FOSS FTIR WineScan®, FOSS GmbH, Rellingen, Germany or using an Anton Paar Alcolyzer® M/ME, Anton Paar GmbH, Graz, AUSTRIA, according to the manufacturer's recommendations.

## Claims

1. A filled aluminium container containing a wine **characterised in that** the maximum oxygen content of the head space is 1 % v/v and the wine prior to filling is micro filtered and dissolved oxygen levels throughout the aluminium container filling process are maintained up to 0.5 mg/L and final levels of dissolved CO₂ are from 50 ppm for white and sparkling wines and from 50 ppm to 400 ppm for red wines, prior to filling the container, wherein the filled aluminium container of wine has a molecular sulphur dioxide content of between 0.4 and 0.8 mg/L

2. A filled aluminium container as defined in claim 1 wherein for still white wines the dissolved CO₂ level is from 50 ppm to 1200 ppm.

3. A filled aluminium container as defined in claim 1 or 2 wherein a multi stage microfiltration treatment, in particular a two stage microfiltration treatment was used.

4. A filled aluminium container as defined in claim 3 wherein the filter pore diameters are 1.0 µm or less, preferably at least 0.60 µm in a first filter housing and 0.20 µm to 0.45 µm in at least one subsequent stage filter housing.

5. A filled aluminium container as defined in any one of claims 1 to 4 wherein the head space in the can is less than 1 % of the volume of the sealed container and preferably comprises the composition nitrogen 80 - 97 % v/v and carbon dioxide 2 - 20 % v/v.

6. A filled aluminium container as claimed in any one of claims 1 to 4 in which the alcohol content is below 9 % v/v wherein sorbic acid is added at a level greater than 90 mg/L.

7. A method of filling an aluminium container with wine **characterized in that** the wine prior to filling is micro filtered and dissolved Oxygen levels throughout the container filling process are maintained up to 0.5 mg/L. and final levels of dissolved CO₂ are from 50 ppm for white and Sparkling wines and from 50 ppm to 400 ppm for red wines, prior to filling the container, wherein the filled aluminium container of wine has a molecular sulphur dioxide content of between 0.4 and 0.8 mg/L.

8. A method of filling an aluminium container with wine as claimed in claim 7 wherein a multi stage microfiltration treatment, in particular a two stage microfiltration treatment is used.

9. A method of filling an aluminium container with wine as claimed in claim 8 wherein the filter pore diameters are 1.0 µm or less, preferably at least 0.60 µm in a first filter housing and 0.30 µm to 0.45 µm in at least one subsequent stage filter housing.

10. A method of filling an aluminium container with wine as claimed in any one of claims 7 to 9 in which the alcohol content is below 9 % v/v wherein sorbic acid is added at a level greater than 90 mg/L.

11. A method of filling an aluminium container with wine as claimed in any one of claims 7 to 10 wherein for still white wines the dissolved CO₂ level is from 50 ppm to 1200 ppm.

## Patentansprüche

1. Gefüllter Aluminiumbehälter enthaltend einen Wein, dadurch charakterisiert, dass der maximale Sauerstoffgehalt des Gasraums bei 1 Vol.% liegt und der Wein vor der Abfüllung mikrofiltriert wird und die Menge an gelöstem Sauerstoff während des gesamten Abfüllungsverfahrens des Aluminiumbehälters bei bis zu 0,5 mg/L gehalten wird und die endgültigen Mengen an gelöstem CO₂ vor der Befüllung des Behälters bei von 50 ppm für Weißweine und Schaumweine und von 50 ppm bis 400 ppm für Rotweine liegen, wobei der gefüllte Aluminiumbehälter von Wein einen Gehalt an molekularem Schwefeldioxid zwischen 0,4 und 0,8 mg/L aufweist.

2. Gefüllter Aluminiumbehälter nach Anspruch 1, wobei die Menge an gelöstem CO₂ für stille Weißweine von 50 ppm bis 1200 ppm beträgt.

3. Gefüllter Aluminiumbehälter nach einem der Ansprüche 1 oder 2, wobei eine mehrstufige Mikrofiltrationsbehandlung, insbesondere eine zweistufige Mikrofiltrationsbehandlung verwendet wurde.

4. Gefüllter Aluminiumbehälter nach Anspruch 3, wobei die Durchmesser der Filterporen 1,0 µm oder weniger, vorzugsweise mindestens 0,60 µm in einem ersten Filtergehäuse und 0,20 µm bis 0,45 ppm in mindestens einem Filtergehäuse einer nachfolgenden Stufe betragen.

5. Gefüllter Aluminiumbehälter nach einem der Ansprüche 1 bis 4, wobei der Gasraum in der Dose weniger als 1% des Volumens des versiegelten Behälters beträgt und vorzugsweise die Zusammensetzung Stickstoff 80 - 97 Vol.% und Kohlendioxid 2 - 20 Vol.% umfasst.

6. Gefüllter Aluminiumbehälter nach einem der Ansprüche 1 bis 4, worin der Alkoholgehalt unter 9 Vol.% liegt, wobei Sorbinsäure in einer Menge von mehr als 90 mg/L zugesetzt wird.

7. Verfahren zur Befüllung eines Aluminiumbehälters mit Wein, dadurch charakterisiert, dass der Wein vor der Befüllung mikrofiltriert wird und die Menge an gelöstem Sauerstoff während des gesamten Abfüllungsverfahrens des Aluminiumbehälters bei bis zu 0,5 mg/L gehalten wird und die endgültigen Mengen an gelöstem CO₂ vor der Befüllung des Behälters bei von 50 ppm für Weißweine und Schaumweine und von 50 ppm bis 400 ppm für Rotweine liegen, wobei der gefüllte Aluminiumbehälter von Wein einen Gehalt an molekularem Schwefeldioxid zwischen 0,4 und 0,8 mg/L aufweist.

8. Verfahren zur Befüllung eines Aluminiumbehälters mit Wein nach Anspruch 7, wobei eine mehrstufige Mikrofiltrationsbehandlung, insbesondere eine zweistufige Mikrofiltrationsbehandlung verwendet wird.

9. Verfahren zur Befüllung eines Aluminiumbehälters mit Wein nach Anspruch 8, wobei die Durchmesser der Filterporen 1,0 µm oder weniger, vorzugsweise mindestens 0,60 µm in einem ersten Filtergehäuse und 0.30 µm bis 0,45 µm in mindestens einem Filtergehäuse einer nachfolgenden Stufe betragen.

10. Verfahren zur Befüllung eines Aluminiumbehälters mit Wein nach einem der Ansprüche 7 bis 9, worin der Alkoholgehalt unter 9 Vol.% liegt, wobei Sorbinsäure in einer Menge von mehr als 90 mg/L zugesetzt wird.

11. Verfahren zur Befüllung eines Aluminiumbehälters mit Wein nach einem der Ansprüche 7 bis 10, wobei die Menge an gelöstem CO₂ für stille Weißweine von 50 ppm bis 1200 ppm beträgt.

## Revendications

1. Contentant rempli, en aluminium, renfermant un vin, **caractérisé en ce que** la teneur maximale en oxygène de l'espace vide est de 1 % v/v, et le vin avant le remplissage est microfiltré, et des niveaux d'oxygène dissous au cours de tout le processus de remplissage du contenant en aluminium sont maintenus à 0,5 mg/L, et des niveaux finaux de CO₂ dissous vont de 50 ppm pour des vins blancs et pétillants et de 50 ppm à 400 ppm pour des vins rouges, avant le remplissage du contenant, où le contenant en aluminium rempli de vin a une teneur moléculaire en dioxyde de soufre comprise entre 0,4 mg/L et 0,8 mg/L.

2. Contenant rempli, en aluminium, comme défini dans la revendication 1, où, pour des vins blancs tranquilles, le niveau de CO₂ dissous est compris entre 50 ppm et 1200 ppm.

3. Contenant rempli, en aluminium, comme défini dans la revendication 1 ou 2, où a été utilisé un traitement de microfiltration multi-étagée, en particulier un traitement de microfiltration à deux étages.

4. Contenant rempli, en aluminium, comme défini dans la revendication 3, où les diamètres des pores des filtres sont de 1,0 µm ou moins, de préférence d'au moins 0,60 µm dans un premier boîtier de filtre, et de 0,20 µm à 0,45 µm dans au moins un boîtier de filtre de l'étage suivant.

5. Contenant rempli, en aluminium, comme défini dans l'une quelconque des revendications 1 à 4, où l'espace vide, dans la canette, est inférieur à 1 % du volume du contenant hermétique et, de préférence, comprend la composition constituée de 80 % v/v à 97 % v/v d'azote et de 2 % v/v à 20 % v/v de dioxyde de carbone.

6. Contenant rempli, en aluminium, selon l'une quelconque des revendications 1 à 4, dans lequel la teneur en alcool est inférieure à 9 % v/v, où de l'acide sorbique est ajouté à un niveau supérieur à 90 mg/L.

7. Procédé de remplissage d'un contenant en aluminium, avec du vin, **caractérisé en ce que** le vin avant le remplissage est microfiltré, et des niveaux d'oxygène dissous au cours de tout le processus de remplissage du contenant sont maintenus à 0,5 mg/L, et des niveaux finaux de CO₂ dissous vont de 50 ppm pour des vins blancs et pétillants et de 50 ppm à 400 ppm pour des vins rouges, avant le remplissage du contenant, où le contenant en aluminium rempli de vin a une teneur moléculaire en dioxyde de soufre comprise entre 0,4 mg/L et 0,8 mg/L.

8. Procédé de remplissage d'un contenant en aluminium, avec du vin, comme revendiqué dans la revendication 7, où est utilisé un traitement de microfiltration multi-étagée, en particulier un traitement de microfiltration à deux étages.

9. Procédé de remplissage d'un contenant en aluminium, avec du vin, comme revendiqué dans la revendication 8, où les diamètres des pores des filtres sont de 1,0 µm ou moins, de préférence d'au moins 0,60 µm dans un premier boîtier de filtre et de 0,30 µm à 0,45 µm dans au moins un boîtier de filtre de l'étage suivant.

10. Procédé de remplissage d'un contenant en aluminium, avec du vin, comme revendiqué dans l'une quelconque des revendications 7 à 9, dans lequel la teneur en alcool est inférieure à 9 % v/v, où de l'acide sorbique est ajouté à un niveau supérieur à 90 mg/L.

11. Procédé de remplissage d'un contenant en aluminium, avec du vin, comme revendiqué dans l'une quelconque des revendications 7 à 10, où, pour des vins blancs tranquilles, le niveau de CO₂ dissous est compris entre 50 ppm et 1200 ppm.
